# EUROPEAN PATENT APPLICATION

(11) **EP 4 567 298 A1**
(43) Date of publication of application: **11.06.2025**
(21) Application number: 23849995.8
(22) Date of filing: 27.07.2023
(51) Int. Cl.: F16H 1/16, F16H 55/24

(54) **WORM-GEAR SPEED REDUCER**

(30) Priority: 02.08.2022 JP 2022123208
(71) Applicant: NSK Steering & Control, Inc., Tokyo, 141-0032 (JP)
(72) Inventor: SEGAWA, Toru, Maebashi-shi, Gunma 371-8527 (JP); HONDA, Yasushi, Maebashi-shi, Gunma 371-8527 (JP)
(74) Representative: Müller-Boré & Partner Patentanwälte PartG mbB
(86) International application number: PCT/JP2023/027511
(87) International publication number: WO 2024/029440

(57) **Abstract**

[Problem] Provided is a worm reducer that easily achieves at a high level both suppression of abnormal noise generated when torque is reversely input and ensuring torque transmission efficiency during normal operation.

[Solution] A worm reducer includes a biasing plate spring 6 that biases an inner diameter side member 5 toward a worm wheel 3. The biasing plate spring 6: is arranged on a far side from the worm wheel 3 in a biasing direction of the biasing plate spring 6 of a portion between an outer circumferential surface of the inner diameter side member 5 and an inner circumferential surface of an outer diameter side member 9; has a load point P that is a contact portion with the outer circumferential surface of the inner diameter side member 5, and a fulcrum S that is a portion of contact portions with the inner circumferential surface of the outer diameter side member 9 that is located closest to the load point P; and exhibits non-linear spring characteristics in which a spring constant increases as a position of the fulcrum S changes to approach the load point P as an amount of deflection in the first direction increases.

## Description

### TECHNICAL FIELD

The present disclosure relates to a worm reducer that can be incorporated into an electric power steering apparatus or the like.

### BACKGROUND ART

In the field of steering apparatuses, electric power steering apparatuses that use an electric motor as an auxiliary power source to reduce the force required for a driver to operate a steering wheel have become widespread.

An electric power steering apparatus includes a worm reducer for increasing torque of the electric motor. The worm reducer includes a housing, a worm wheel, and a worm. The housing has a wheel accommodating portion and a worm accommodating portion having a central axis that is at a skewed position relative to a central axis of the wheel accommodating portion and having an intermediate portion in the axial direction that opens into the wheel accommodating portion. The worm wheel has wheel teeth on an outer circumferential surface thereof, and is rotatably supported inside the wheel accommodating portion. The worm has worm teeth on an outer circumferential surface thereof that engage with the wheel teeth, and is rotatably supported inside the worm accommodating portion.

Torque of the electric motor is amplified by being transmitted to the worm wheel through the worm, and is then applied as auxiliary power to a steering force transmitting member such as a steering shaft or a pinion shaft or rack shaft of a steering gear unit. As a result, the force required by the driver to operate the steering wheel is reduced.

In a worm reducer, unavoidable backlash exists at an engaging portion between the wheel teeth and the worm teeth due to dimensional errors and assembly errors of components of the worm reducer. Due to the presence of backlash, an unpleasant teeth rattling noise may occur at the engaging portion when changing the direction of rotation of the steering wheel.

JP 2020-128803 A describes a configuration in which a tip-end portion of the worm is biased toward the worm wheel side in order to suppress the occurrence of teeth rattling noise at the engaging portion between the wheel teeth and the worm teeth. The configuration includes an outer fitting member that is externally fitted onto a support bearing that rotatably supports the tip-end portion of the worm and is arranged to be movable toward and away from the worm wheel, and a biasing spring arranged between the outer fitting member and the worm accommodating portion.

The biasing spring is elastically deformed, and biases the outer fitting member toward the worm wheel side by an elastic restoring force of the biasing spring. As a result, backlash at the engaging portion between the wheel teeth and the worm teeth is suppressed, and the occurrence of teeth rattling noise is suppressed.

### CITATION LIST

### PATENT LITERATURE

Patent Literature 1: JP 2020-128803 A

### SUMMARY OF INVENTION

### TECHNICAL PROBLEM

The known configuration described in JP 2020-128803 A has room for improvement in the aspects described below.

In a worm reducer incorporated in a steering apparatus, when an automobile tire runs over a curb or when an automobile travels on a rough road, a large torque may be reversely input from the tire to the worm wheel. When such a reverse torque input occurs, a large engaging reaction force acts on the worm from the engaging portion between the worm teeth and the wheel teeth, causing the worm to displace in a direction away from the worm wheel, increasing elastic deformation of the biasing spring. As a result, the biasing spring or a member existing around the biasing spring may collide with an adjacent member with great force, producing an unpleasant impact noise.

In addition, the torque inputted in reverse from the tire to the worm wheel may become torque vibration of which the direction of rotation is repeatedly reversed. In that case, there is a possibility that striking noise due to collision between members or teeth rattling noise between the worm teeth and the wheel teeth may occur repeatedly, or in other words, rattling noise may occur.

In order to suppress the occurrence of these abnormal noises, it is necessary to make it possible for the force of the collision between members to be sufficiently suppressed by the elasticity of the biasing spring; or more specifically, it is necessary to increase the spring constant of the biasing spring.

On the other hand, during normal operation when no reverse torque input is occurring, it is desirable to ensure sufficient efficiency in transmitting torque from the worm to the worm wheel by keeping the frictional force acting on the engaging portion between the worm teeth and the wheel teeth small, regardless of displacement of the worm due to the generation of engaging reaction force. In order to achieve this, it is necessary to keep the biasing force of the biasing spring small during normal operation, and more specifically, it is necessary to reduce the spring constant of the biasing spring.

However, in the known configuration described in JP 2020-128803 A, the spring constant of the biasing spring is constant, and thus it is difficult to meet the two above-mentioned requirements, which are in a contradictory relationship with each other.

An object of the present disclosure is to provide a worm reducer that can easily suppress the occurrence of abnormal noise when torque is input in reverse while ensuring a high level of torque transmission efficiency during normal operation.

### SOLUTION TO PROBLEM

A worm reducer according to one aspect of the present disclosure includes a housing, a worm wheel, a worm, a support bearing, and a biasing plate spring.

The housing has a wheel accommodating portion and a worm accommodating portion having a central axis that is at a skewed position relative to a central axis of the wheel accommodating portion and having an intermediate portion in an axial direction that opens into the wheel accommodating portion.

The worm wheel has wheel teeth on an outer circumferential surface thereof and is rotatably supported inside the wheel accommodating portion.

The worm has worm teeth on an outer circumferential surface thereof that engage with the wheel teeth and is rotatably supported inside the worm accommodating portion.

The support bearing is externally fitted onto a tip-end portion of the worm.

The biasing plate spring biases an inner diameter side member, that is the support bearing or an outer fitting member externally fitted onto the support bearing, toward the worm wheel.

In the worm reducer of one aspect according to the present disclosure, the biasing plate spring is arranged on a far side from the worm wheel in a first direction, that is a biasing direction of the biasing plate spring, in a portion between an outer circumferential surface of the inner diameter side member and an inner circumferential surface of an outer diameter side member, that is the worm accommodating portion or an inner fitting member internally fitted into the worm accommodating portion.

The biasing plate spring has a load point that is a contact portion with the outer circumferential surface of the inner diameter side member, and a fulcrum that is a portion of contact portions with the inner circumferential surface of the outer diameter side member that is located at a position closest to the load point.

The biasing plate spring exhibits a non-linear spring characteristic in which a spring constant increases as a position of the fulcrum changes to approach the load point as an amount of deflection in the first direction increases. The increase in the spring constant accompanying an increase in the amount of deflection in the first direction may be a stepwise increase or a continuous increase.

In the worm reducer of one aspect according to the present disclosure, the biasing plate spring, in a state of being arranged to extend in a third direction perpendicular to both the first direction and a second direction that is the axial direction of the worm accommodating portion, has one end portion in the third direction supported in a cantilever manner by the outer diameter side member, and has the load point at an other end portion in the third direction.

In the worm reducer of one aspect according to the present disclosure, the one end portion of the biasing plate spring is supported in a cantilever manner relative to the outer diameter side member using a pin arranged to extend in the second direction.

In the worm reducer of one aspect according to the present disclosure, the outer diameter side member is made of an aluminum alloy, and the pin is made of an iron alloy.

In the worm reducer of one aspect according to the present disclosure, an inner circumferential surface of the outer diameter side member has a main holding portion and a sub-holding portion. The main holding portion is larger than the outer circumferential surface of the inner diameter side member, and the inner diameter side member is arranged inside the main holding portion. The sub-holding portion protrudes outward in a radial direction from an end portion of the main holding portion that is on a far side from the worm wheel in the first direction, and the biasing plate spring is arranged inside the sub-holding portion.

The main holding portion, as viewed from the second direction, exists in a circumferential range capable of intersecting with a radial line L1 including a vector of an engaging reaction force F1 applied to the worm from an engaging portion between the worm teeth and the wheel teeth when the worm rotates in a predetermined direction, and capable of intersecting with a radial line L2 including a vector of an engaging reaction force F2 applied to the worm from the engaging portion when the worm rotates in a direction opposite to the predetermined direction.

An inclination angle of the radial line L2 with respect to the third direction is smaller than an inclination angle of the radial line L1 with respect to the third direction. In this case, a portion of the sub-holding portion, at which the one end portion of the biasing plate spring is arranged, is arranged more on the same side as the radial line L2 than a central axis of the worm in the third direction.

In the worm reducer of one aspect according to the present disclosure, the outer diameter side member has a plurality of corner portions spaced apart from each other in the third direction as portions that come into contact with the biasing plate spring during operation.

In the worm reducer of one aspect according to the present disclosure, the biasing plate spring is configured to be capable of simultaneously coming in contact with two or more of the plurality of corner portions during operation.

In the worm reducer of one aspect according to the present disclosure, the outer diameter side member has a convex curved surface portion that comes into contact with the biasing plate spring during operation.

The worm reducer of one aspect according to the present disclosure includes an elastic clamping means for clamping the inner diameter side member from both sides in the third direction. The elastic clamping means has a pair of clamping plate springs arranged on both sides in the third direction in a portion between the outer circumferential surface of the inner diameter side member and the inner circumferential surface of the outer diameter side member.

Each clamping plate spring of the pair of clamping plate springs exhibits a non-linear spring characteristic in which a spring constant increases as an amount of deflection in the third direction increases. An increase in the spring constant accompanying an increase in the amount of deflection in the third direction may be a stepwise increase or a continuous increase.

The technique according to the present disclosure can be implemented by appropriately combining the above-described aspects to the extent that no contradiction occurs.

### EFFECT OF INVENTION

With the worm reducer of one aspect according to the present disclosure, it is easy to achieve, at a high level, both the suppression of abnormal noise when torque is input in reverse and the assurance of torque transmission efficiency during normal operation.

### BRIEF DESCRIPTION OF DRAWINGS

[FIG. 1] FIG. 1 is a diagram illustrating an electric power steering apparatus incorporating a worm reducer of a first example of an embodiment according to the present disclosure.
[FIG. 2] FIG. 2 is a cross-sectional view taken along line A-A in FIG. 1.
[FIG. 3] FIG. 3 is an enlarged view of the upper right portion in FIG. 2.
[FIG. 4] FIG. 4 is an exploded perspective view of the portion illustrated in FIG. 3.
[FIG. 5] FIG. 5 is a view of the portion illustrated in FIG. 3 as viewed from the right side with a cover body and retaining ring removed.
[FIG. 6] FIG. 6 is an enlarged view of portion B in FIG. 5.
[FIG. 7] FIG. 7 is an enlarged view of portion C in FIG. 5.
[FIG. 8] FIG. 8 is a view of the housing in the first example as viewed from the right side in FIG. 3.
[FIG. 9] FIG. 9 is a perspective view illustrating a support bearing, a biasing plate spring, and an elastic clamping means in the first example.
[FIG. 10] FIG. 10 is a view illustrating the members illustrated in FIG. 9 in isolation.
[FIG. 11] FIG. 11A is a side view of a biasing plate spring in the first example; FIG. 11B is a view as seen from above of FIG. 11A; FIG. 11C is a view as seen from below of FIG. 11A; FIG. 11D is a view as viewed from the left side of FIG. 11A; FIG. 11E is a view as viewed from the right side of FIG. 11A.
[FIG. 12] FIG. 12A is a side view of the elastic clamping means in the first example; FIG. 12B is a view as seen from above of FIG. 12A; FIG. 12C is a view as seen from below of FIG. 12A; FIG. 12D is a view as viewed from the left side of FIG. 12A; FIG. 12E is a view as viewed from the right side of FIG. 12A.
[FIG. 13] FIG. 13A to 13D are diagrams that schematically illustrate an increase in an amount of deflection of a biasing plate spring in a first direction in the first example.
[FIG. 14] FIG. 14 is a diagram (conceptual diagram) illustrating spring characteristics of the biasing plate spring in the first example.
[FIG. 15] FIG. 15A to FIG. 15C are diagrams that schematically illustrate how an amount of deflection in a third direction of the elastic clamping means (clamping plate spring) in the first example increases.
[FIG. 16] FIG. 16 is a diagram (conceptual diagram) illustrating spring characteristics of the elastic clamping means (clamping plate spring) in the first example.
[FIG. 17] FIG. 17A to FIG. 17C are diagrams schematically illustrating how the amount of deflection in the third direction of the elastic clamping means (clamping plate spring) in the first example does not change with movement in the first direction.
[FIG. 18] FIG. 18 is a diagram corresponding to FIG. 13A and related to a second example of an embodiment according to the present disclosure.

### DESCRIPTION OF EMBODIMENTS

### [First Example]

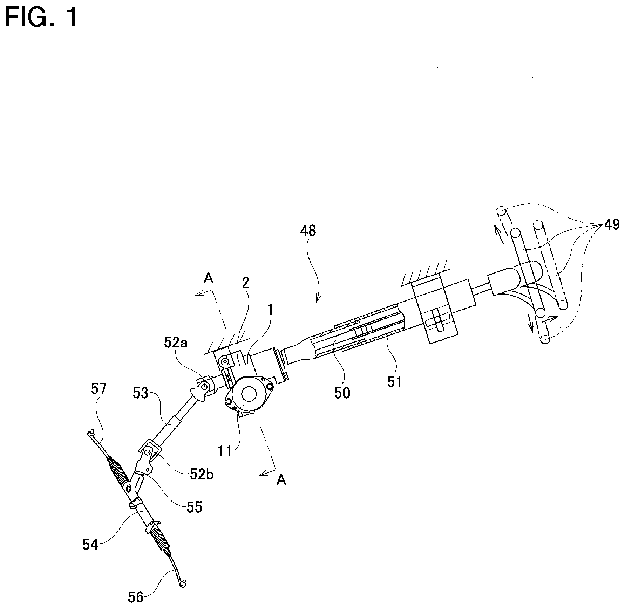

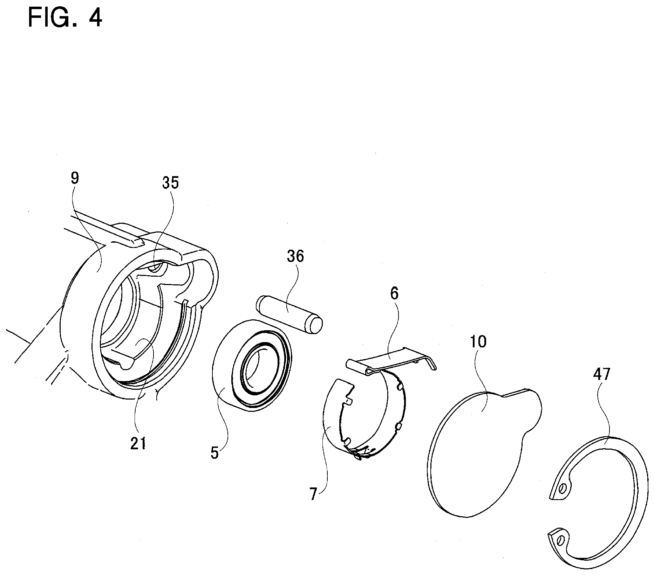

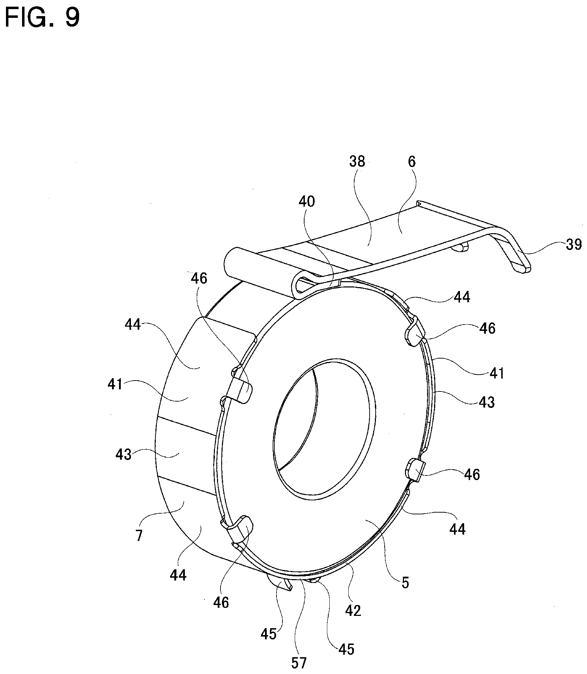

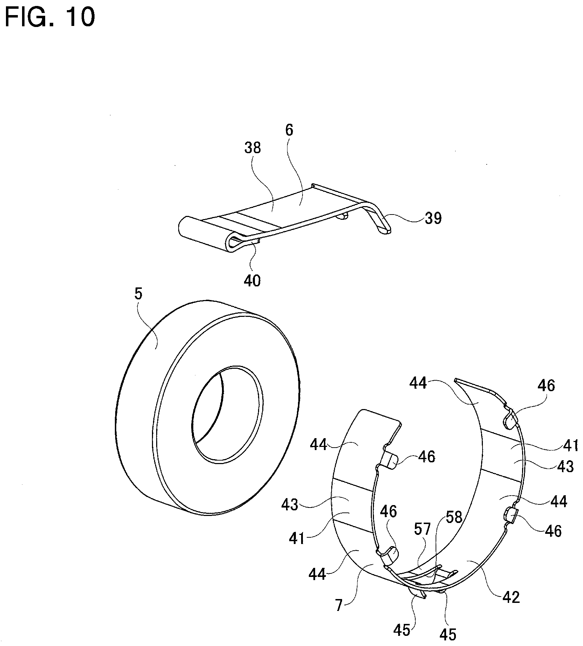

A first example of an embodiment according to the present disclosure will be described with reference to FIG. 1 to FIG. 17.

### (1) Worm Reducer

A worm reducer according to the present disclosure is applicable to worm reducers incorporated into a part of various mechanical devices; however, in the present example, a case will be described in which the technique according to present disclosure is applied to a worm reducer incorporated into a part of an electric power steering apparatus of an automobile.

As illustrated in FIGS. 1 to 5, a worm reducer 1 of the present example includes a housing 2, a worm wheel 3, a worm 4, a support bearing 5, and a biasing plate spring 6.

The housing 2 includes a wheel accommodating portion 8 and a worm accommodating portion 9 having a central axis that is at a skewed position relative to a central axis of the wheel accommodating portion 8 and an intermediate portion in an axial direction thereof that opens into the wheel accommodating portion 8. In the present example, the housing 2 is made of an aluminum alloy. However, in a case of implementing the technique according to the present disclosure, the material of the housing may be any material as long as the material ensures the required rigidity of the housing.

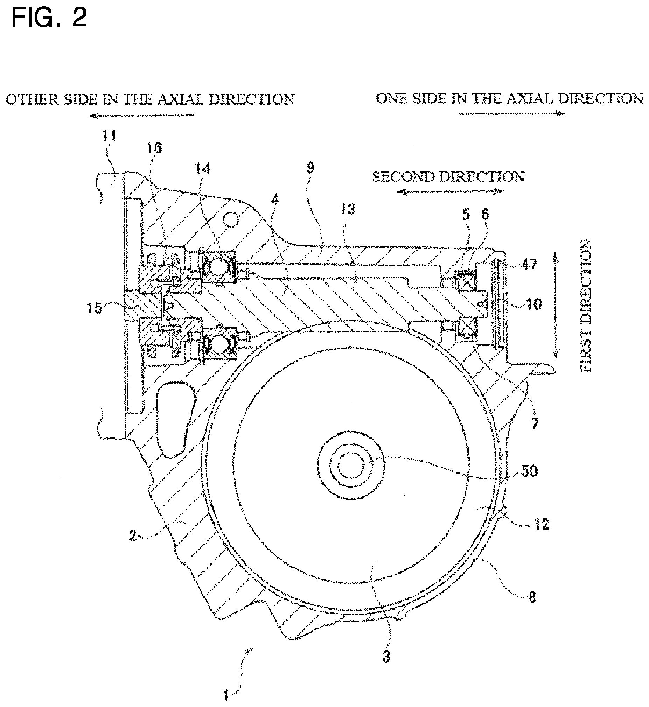

The wheel accommodating portion 8 is configured in a cylindrical shape. In FIG. 2, the central axis of the wheel accommodating portion 8 extends in a front-to-rear direction.

The worm accommodating portion 9 is configured in a cylindrical shape and has opening portions at end portions on both sides in the axial direction. In FIG. 2, the central axis of the worm accommodating portion 9 extends in a left-right direction. An opening portion on one side in the axial direction of the worm accommodating portion 9 is closed by a cover body 10 that is attached to the opening portion by using a retaining ring 47. An opening portion on the other side in the axial direction of the worm accommodating portion 9 is closed by an electric motor 11 that is fixedly coupled to the housing 2.

Note that, regarding each member including the worm accommodating portion 9 and the worm 4 housed in the worm accommodating portion 9, the one side in the axial direction is the right side in FIG. 2, and the other side in the axial direction is the left side in FIG. 2.

The worm wheel 3 has wheel teeth 12 on an outer circumferential surface thereof. In the present example, the wheel teeth are formed by a helical gear. The worm wheel 3 is rotatably supported inside the wheel accommodating portion 8. In the present example, the worm wheel 3 is externally fitted and fixed to a portion in an axial direction of a rotating shaft (in the present example, a front-side portion of a steering shaft 50 in front-rear direction of a vehicle) that is rotatably supported inside the wheel accommodating portion 8.

The worm 4 has worm teeth 13 on an outer circumferential surface of an intermediate portion in the axial direction thereof that engage with wheel teeth 12 of the worm wheel 3, and is rotatably supported inside the worm accommodating portion 9. In the present example, the worm teeth 13 are screw-shaped and the twist direction is in the right-handed direction. However, the twist direction may also be the left-handed direction.

A portion near a base end of the worm 4 (a portion near the other end in the axial direction) is rotatably supported by a ball bearing 14 with respect to the worm accommodating portion 9. In the present example, an outer ring of the ball bearing 14 is internally fitted into the worm accommodating portion 9 with a radial gap therebetween, and an inner ring of the ball bearing 14 is externally fitted onto the portion near the base end of the worm 4 with a gap in the radial direction therebetween. As a result, the portion near the base end of the worm 4 is supported with respect to the worm accommodating portion 9 so as to be capable of rotational and pivotal displacement. The outer ring of the ball bearing 14 may be internally fitted into the worm accommodating portion 9 by an interference fit.

Note that the configuration for supporting the portion near the base end of the worm 4 with respect to the worm accommodating portion 9 so as to enable rotational and pivotal displacement is not limited to the configuration of the present example, and various configurations may be adopted.

The base end portion (other end portion in the axial direction) of the worm 4 is connected to a tip-end portion (one end in an axial direction) of an output shaft 15 of the electric motor 11 by means of a coupling 16 so as to enable torque transmission and pivotal displacement. The base end portion of the worm 4 can be connected to the tip-end portion of the output shaft 15 of the electric motor 11 by a spline engagement or the like to enable torque transmission and pivotal displacement.

The support bearing 5 is externally fitted onto a tip-end portion (one end portion in the axial direction) of the worm 4.

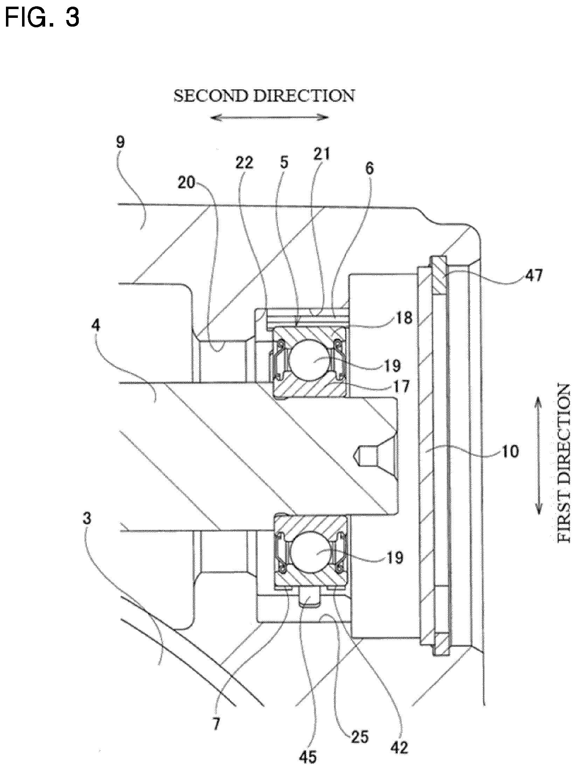

In the present example, the support bearing 5 is configured by a ball bearing. That is, as illustrated in FIG. 3, the support bearing 5 includes an inner ring 17, an outer ring 18, and a plurality of balls 19 arranged between an inner-ring raceway provided on an outer circumferential surface of the inner ring 17 and an outer-ring raceway provided on an inner circumferential surface of the outer ring 18. The inner ring 17 is externally fitted and fixed onto the tip-end portion of the worm 4. Note that, in a case of implementing the technique according to the present disclosure, the support bearing may also be configured with other types of bearings, such as a roller bearing.

In the present example, an inner circumferential surface of the worm accommodating portion 9 has a small-diameter cylindrical surface portion 20 at a portion near an end portion on the one side in the axial direction with a smaller diameter than an outer circumferential surface of the support bearing 5, in other words, an outer circumferential surface of the outer ring 18, and has a holding portion 21 at a portion adjacent to the one side in the axial direction of the small-diameter cylindrical surface portion 20 with a larger diameter than the small-diameter cylindrical surface portion 20. The small-diameter cylindrical surface portion 20 and the holding portion 21 are connected by a stepped surface 22 facing the one side in the axial direction. In the present example, the support bearing 5 is arranged inside the holding portion 21 so as to be movable in the radial direction.

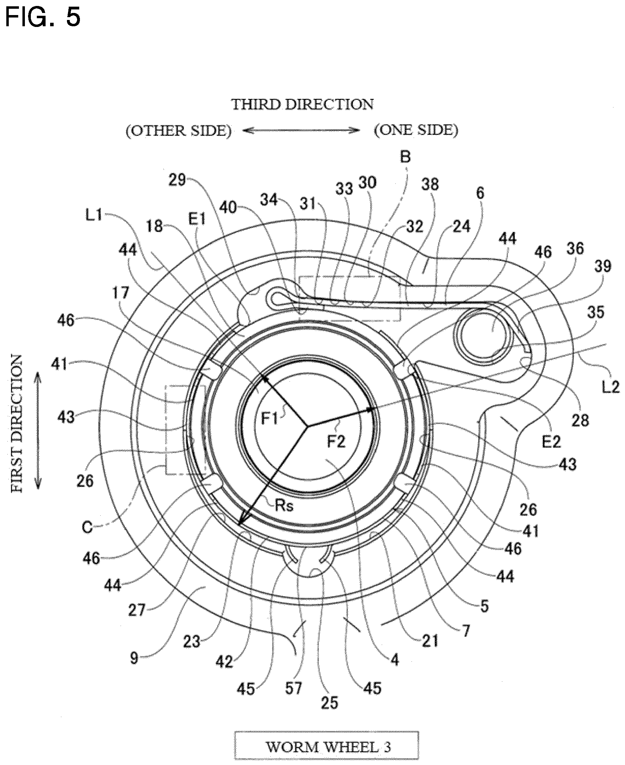

In the following description, a direction in which the worm 4 moves toward or away from the worm wheel 3, which is a biasing direction of the biasing plate spring 6 (the up-down direction in FIGS. 2, 3, and 5), is referred to as a "first direction", the axial direction of the worm 4 and the worm accommodating portion 9 (the left-right direction in FIGS. 2 and 3, the front-back direction in FIG. 5) is referred to as a "second direction", and a direction perpendicular to both the first and second directions (the front-back direction in FIGS. 2 and 3, the left-right direction in FIG. 5) is referred to as a "third direction". Note that the tip-end portion of the worm 4 corresponds to the one end portion of the worm 4 in the axial direction and the second direction.

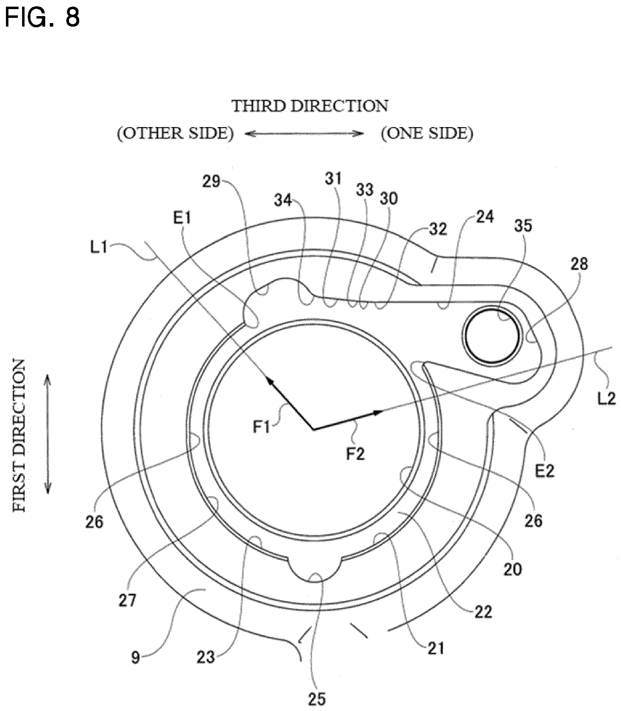

As illustrated in FIGS. 5 and 8, the holding portion 21 of the worm accommodating portion 9 includes a main holding portion 23, a sub-holding portion 24, and a locking portion 25. The main holding portion 23 is arranged approximately coaxially with the small-diameter cylindrical surface portion 20 and has an approximately cylindrical shape that is larger than the outer circumferential surface of the support bearing 5. The sub-holding portion 24 protrudes outward in the radial direction from an end portion of the main holding portion 23 on a side far from the worm wheel 3 in the first direction (upper side in FIGS. 5 and 8). The locking portion 25 protrudes outward in the radial direction from an end portion of the main holding portion 23 that is closer to the worm wheel 3 in the first direction.

The main holding portion 23 is a portion in which the support bearing 5 is arranged so as to be movable in the radial direction. The worm reducer 1 of the present example further includes an elastic clamping means 7 arranged between the outer circumferential surface of the support bearing 5 and an inner circumferential surface of the main holding portion 23.

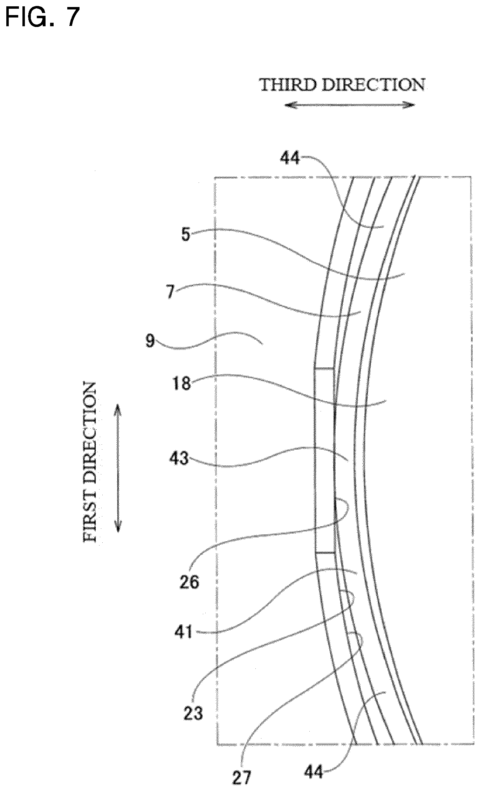

End portions on both sides in the third direction of the main holding portion 23 are configured by a pair of flat surface portions 26 (see FIG. 7) extending in the first direction. The pair of flat surface portions 26 is in contact with a pair of clamping plate springs 41 of the elastic clamping means 7. The distance between the pair of flat surface portions 26 in the third direction is greater than the diameter of the outer circumferential surface of the support bearing 5. The length of the pair of flat surface portions 26 in the first direction is ensured to be greater than a stroke amount by which the elastic clamping means 7 can move in the first direction together with the tip-end portion of the worm 4 and the support bearing 5 during operation.

As a result, regardless of the movement of the elastic clamping means 7 in the first direction, the pair of clamping plate springs 41 of the elastic clamping means 7 is maintained in a state of contact with the pair of flat surface portions 26.

The portion of the main holding portion 23 that is offset in the circumferential direction from the pair of flat surface portions 26 is configured as a cylindrical surface portion 27 having a larger diameter than the outer circumferential surface of the support bearing 5. Note that in a case of implementing the technique according to the present disclosure, the pair of flat surface portions of the main holding portion may be omitted, and the main holding portion may be configured only by the cylindrical surface portion.

In the worm reducer 1 of the present example, when torque is transmitted from the worm 4 to the worm wheel 3, an engaging reaction force is applied to the worm 4 from the engaging portion between the wheel teeth 12 and the worm teeth 13. The engaging reaction force includes not only a first directional component but also a third directional component. The direction of the third directional component of the engaging reaction force is opposite when the worm 4 rotates in a predetermined direction and when the worm 4 rotates in a direction opposite to the predetermined direction. In addition, the ratio of the first direction component to the third direction component included in the engaging reaction force differs between when the worm 4 rotates in the predetermined direction and when the worm 4 rotates in the opposite direction.

That is, when torque is transmitted between the worm 4 and the worm wheel 3, an engaging reaction force F1 or F2 as illustrated in FIG. 5 is applied to the tip-end portion of the worm 4. The engaging reaction forces F1, F2 are directed in directions asymmetric with each other with respect to the third direction. The present example is an example in which the twist direction of the worm teeth 13 is a right-handed thread direction; however, in a case in which the twist direction of the worm teeth 13 is a left-handed thread direction, the directions of the engaging reaction forces F1 and F2 in FIG. 5 are reversed in the third direction. In this case, the configuration of the portion of the present example illustrated in FIG. 5 can be inverted in the third direction, that is, left and right can be inverted in FIG. 5.

As illustrated in FIG. 5, the range in the circumferential direction, in which the cylindrical surface portion 27 of the main holding portion 23 exists, includes the same positions in the circumferential direction as the vectors of the engaging reaction forces F1, F2 when viewed from the second direction. That is, radial lines L1, L2 including the vectors of the engaging reaction forces F1, F2 intersect with portions in the circumferential direction of the cylindrical surface portion 27 of the main holding portion 23.

The sub-holding portion 24 is a portion where the biasing plate spring 6 is arranged on the inside thereof. The sub-holding portion 24 has a large recessed portion 28 at a portion on one side in the third direction (the right side in FIGS. 5 and 8) that is recessed toward the one side in the third direction. The sub-holding portion 24 has a small recessed portion 29 at a portion on the other side in the third direction (left side in FIG. 5 and FIG. 8) that is recessed in the first direction toward the far side from the worm wheel 3.

The sub-holding portion 24 has, between the large recessed portion 28 and the small recessed portion 29, a first inclined surface portion 30 and a second inclined surface portion 31 in this order from the large recessed portion 28 side. Each of the first inclined surface portion 30 and the second inclined surface portion 31 is formed by a flat surface that is inclined in a direction toward the side farther from the worm wheel 3 in the first direction as going toward the other side in the third direction.

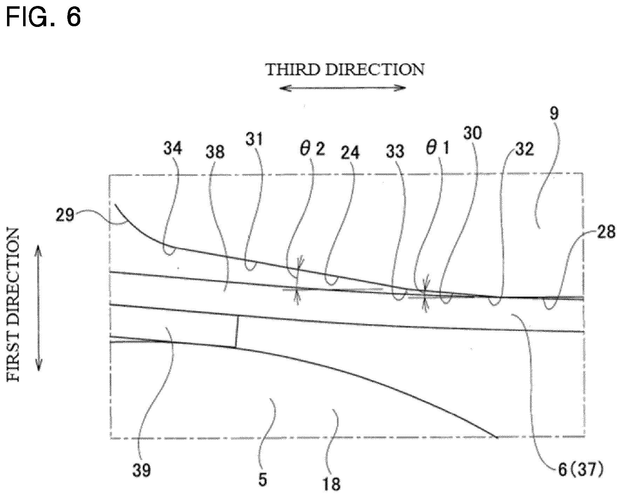

As illustrated in FIG. 6, the inclination angle θ2 of the second inclined surface portion 31 with respect to the third direction is larger than the inclination angle θ1 of the first inclined surface portion 30 with respect to the third direction (θ2 > θ1). In the present example, the length of the second inclined surface portion 31 is longer than the length of the first inclined surface portion 30 when viewed from the second direction. The large recessed portion 28 and the first inclined surface portion 30 are connected by a first corner portion 32. The first inclined surface portion 30 and the second inclined surface portion 31 are connected by a second corner portion 33. The second inclined surface portion 31 and the small recessed portion 29 are connected by a third corner portion 34.

That is, the first corner portion 32, the second corner portion 33, and the third corner portion 34 are located in the order of the first corner portion 32, the second corner portion 33, and the third corner portion 34 in a direction away from a pin 36 arranged in the large recessed portion 28 with respect to the third direction (toward the left in FIGS. 5, 6, and 8), and the first corner portion 32, the second corner portion 33, and the third corner portion 34 are located in the order of the first corner portion 32, the second corner portion 33, and the third corner portion 34 in a direction away from the worm wheel 3 with respect to the first direction (upward in FIGS. 5, 6, and 8). The first corner portion 32, the second corner portion 33, and the third corner portion 34, which are arranged spaced apart in the third direction, are portions that come into contact with the biasing plate spring 6 during operation.

As illustrated in FIGS. 5 and 8, the locking portion 25 is a portion for engaging a portion of the elastic clamping means 7 in the circumferential direction. **In** the illustrated example, the locking portion 25 is configured as a semi-cylindrical concave surface.

In the present example, the worm accommodating portion 9 has a recessed portion 35 that opens into a portion of the stepped surface 22 that is located inside the large recessed portion 28. An end portion on the other side in the axial direction of a cylindrical pin 36 arranged to extend in the second direction is internally fitted and supported in the recessed portion 35 by press fitting. The pin 36 is a member used for supporting the biasing plate spring 6 in a cantilever manner with respect to the worm accommodating portion 9. In the present example, the pin 36 is made from an iron alloy. However, in a case of implementing the technique according to the present disclosure, the material of the pin 36 is arbitrary as long as the rigidity required for the pin 36 is ensured.

The biasing plate spring 6 biases the support bearing 5, which corresponds to an inner-diameter side member, towards the worm wheel 3. As a result, by suppressing backlash between the wheel teeth 12 and the worm teeth 13, the occurrence of teeth rattling noise is suppressed. Note that in a case of implementing the technique according to the present disclosure, an outer fitting member externally fitted onto the support bearing 5 can also be used as the inner diameter side member. That is, the outer fitting member can be biased toward the worm wheel side by the biasing plate spring.

The biasing plate spring 6 is entirely arranged inside the worm accommodating portion 9. In the present example, as illustrated in FIG. 5, the biasing plate spring 6 is arranged on the side far from the worm wheel 3 with respect to the first direction in a portion between the outer circumferential surface of the support bearing 5 and the holding portion 21 provided on the inner circumferential surface of the worm accommodating portion 9 corresponding to an outer diameter side member. More specifically, the biasing plate spring 6 is arranged inside the sub-holding portion 24 of the holding portion 21.

Noter that, in a case of implementing the technique according to the present disclosure, an inner fitting member that is internally fitted into the worm accommodating portion can also be used as the outer diameter side member. That is, the holding portion 21 can be provided on an inner circumferential surface of the inner fitting member.

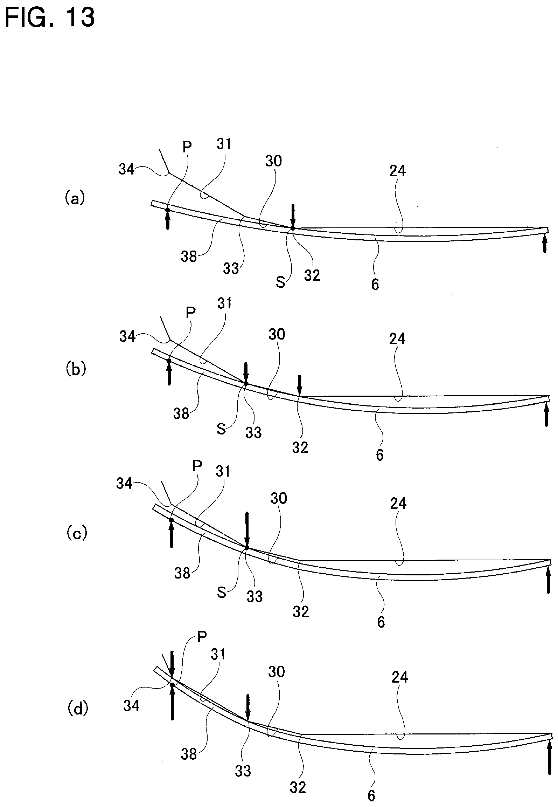

In the present example, the biasing plate spring 6 has a load point P that is a contact portion with the outer circumferential surface of the support bearing 5, and a fulcrum S that is a portion of contact portions with the holding portion 21 that is located closest to the load point P (see FIG. 13A). In addition, the biasing plate spring 6 exhibits non-linear spring characteristics in which the spring constant increases as the position of the fulcrum S changes so as to approach the load point P as an amount of deflection with respect to the first direction increases.

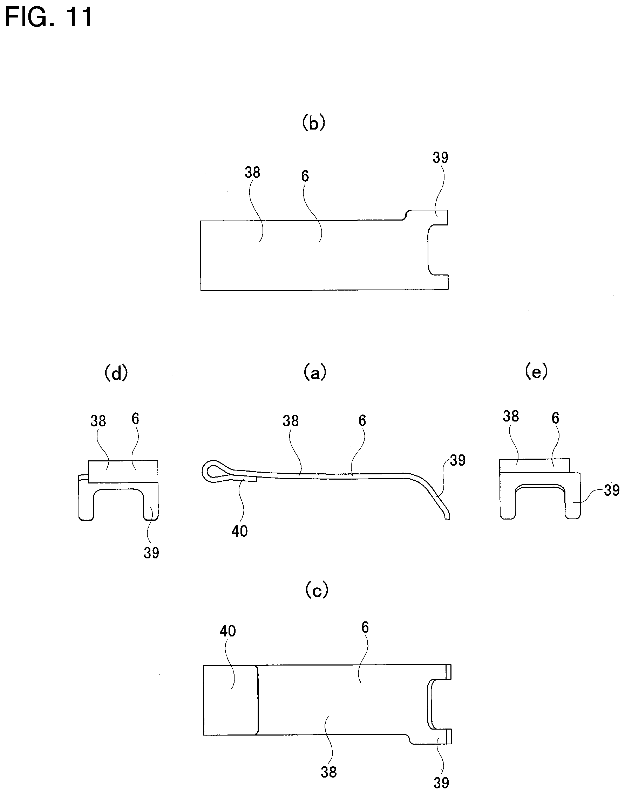

In the present example, as illustrated in FIGS. 11A to 11E, the biasing plate spring 6 includes a band plate portion 38 having a rectangular flat shape and a large aspect ratio, a base plate portion 39 bent at an obtuse angle from an edge portion of a base end side in the longitudinal direction of the band plate portion 38 (right side in FIG. 11A) to one side in the thickness direction (lower side in FIG. 11A), and a folded plate portion 40 folded back 180 degrees to the one side in the thickness direction from an edge portion of the tip-end side in the longitudinal direction of the band plate portion 38 (left side in FIG. 11A), with the tip-end side portion being overlapped with the tip-end side portion of the band plate portion 38.

In the present example, the biasing plate spring 6 is made of a metal plate such as an iron alloy. However, in a case of implementing the technique according to the present disclosure, the material of the biasing plate spring 6 is arbitrary as long as the spring rigidity required for the biasing plate spring 6 can be ensured.

As illustrated in FIG. 5, in a state of being arranged so as to extend in the third direction, the biasing plate spring 8 is supported at one end portion with respect to the third direction (in this example, the end portion on the one side in the third direction) in a cantilever manner to the worm accommodating portion 9, and has a load point P at the other end portion with regard to the third direction (in this example, the end portion on the other side in the third direction) (see FIG. 13A).

In the present example, the end portion on the one side in the third direction of the biasing plate spring 6 is supported in a cantilever manner to the worm accommodating portion 9 by using a pin 36 arranged so as to extend in the second direction.

More specifically, when the worm reducer 1 is in an unloaded state, in other words, when the torque transmitted from the worm 4 to the worm wheel 3 is zero and the engaging reaction forces F1, F2 applied to the tip-end portion of the worm 4 are zero, the biasing plate spring 6 is arranged relative to the surrounding parts as described below.

The base end portion of the base plate portion 39 is in elastic contact with a bottom portion of the large recessed portion 28 of the sub-holding portion 24. A side surface on the concave side (the lower side surface in FIG. 5), which is one side surface in the thickness direction of the connection portion between the band plate portion 38 and the base plate portion 39, is in elastic contact with the outer circumferential surface of the pin 36. The other side surface (the upper side surface in FIG. 5) in the thickness direction of an intermediate portion of the band plate portion 38 is in elastic contact with the first corner portion 32 of the sub-holding portion 24. The one side surface (the lower side surface in FIG. 5) in the thickness direction of the tip-end portion of the folded plate portion 40 is in elastic contact with an end portion of the outer circumferential surface of the support bearing 5 that is on the far side from the worm wheel 3 with respect to the first direction.

In the present example, the folded plate portion 40 is provided at a portion of the biasing plate spring 6 that comes into contact with the outer circumferential surface of the support bearing 5. Therefore, the size of the distance in the radial direction between a portion of the outer circumferential surface of the support bearing 5 with which the biasing plate spring 6 contacts and the holding portion 21 can be adjusted to an appropriate size based on the presence of the folded plate portion 40.

The band plate portion 38 is not in contact with the second corner portion 33 and the third corner portion 34, and distances exist between the band plate portion 38 and the second corner portion 33 and between the band plate portion 38 and the third corner portion 34.

In this state, the biasing plate spring 6 elastically biases the support bearing 5 toward the worm wheel 3 side, with the contact point with the first corner portion 32 serving as the fulcrum S and the contact point with the outer circumferential surface of the support bearing 5 serving as the load point P (see FIG. 13A).

In the present example, the biasing plate spring 6 is held at the location of use by frictional force acting on the contact points with the worm accommodating portion 9 and the pin 36. In addition, the load point P is arranged at approximately the same position as the third corner portion 34 of the sub-holding portion 24 with respect to the third direction.

In the present example, when the engaging reaction force F1 or F2 applied to the tip-end portion of the worm 4 increases, a pressing force applied from the support bearing 5 to the load point P of the biasing plate spring 6 increases, and the amount of deflection of the biasing plate spring 6 (band plate portion 38) with respect to the first direction increases. FIGS. 13A to 13D are diagrams illustrating a state in which the amount of deflection increases.

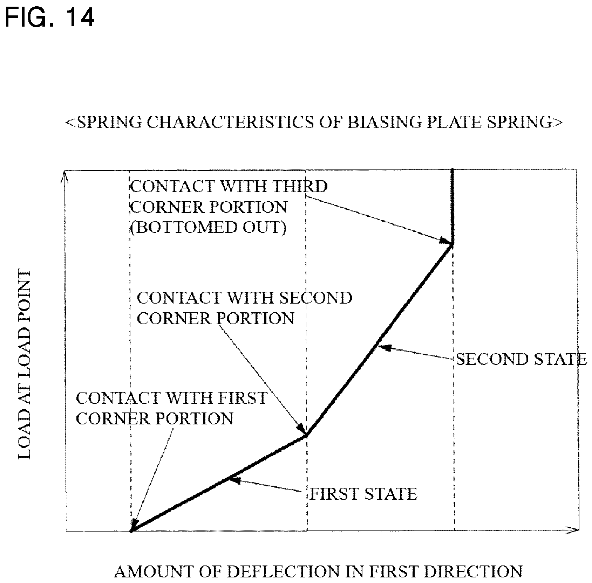

In the present example, when the amount of deflection of the biasing plate spring 6 with respect to the first direction increases, the elastic contact position of the biasing plate spring 6 with the sub-holding portion 24 changes in order as illustrated in FIGS. 13A to 13D. That is, the position of the fulcrum S of the biasing plate spring 6 changes in a stepwise manner in a direction approaching the load point P. As a result, the spring constant of the biasing plate spring 6 increases stepwise as illustrated in FIG. 14 (conceptual diagram).

More specifically, as the amount of deflection of the biasing plate spring 6 with respect to the first direction increases, the elastic contact position of the biasing plate spring 6 with the sub-holding portion 24 changes from the first corner portion 32 (one location) illustrated in FIG. 13A to the first corner portion 32 and second corner portion 33 (two locations) illustrated in FIG 13B, then changes to the second corner portion 33 (one location) illustrated in FIG. 13C, and then changes to the second corner portion 33 and third corner portion 34 (two locations) illustrated in FIG 13D. That is, in the present example, the biasing plate spring 6 is configured so as to be capable of simultaneously contacting two or more of the plurality of corner portions during operation.

As illustrated in FIG. 13A, in a state in which the biasing plate spring 6 is in elastic contact with only the first corner portion 32 (one location), the fulcrum S of the biasing plate spring 6 becomes the contact portion with the first corner portion 32. In this state (first stage), the spring constant of the biasing plate spring 6 is relatively small, as illustrated in FIG. 14. In the present example, during normal operation when no reverse torque input occurs, the amount of deflection of the biasing plate spring 6 with respect to the first direction is kept small, and the biasing plate spring 6 is always in contact with the first corner portion 32.

As illustrated in FIG. 13B, in a state in which the biasing plate spring 6 is in elastic contact with the first corner portion 32 and the second corner portion 33 (two locations), and as illustrated in FIG. 13C, in a state in which the biasing plate spring 6 is in elastic contact with only the second corner portion 33 (one location), the fulcrum S of the biasing plate spring 6 becomes the contact point with the second corner portion 33. In this state (second stage), the spring constant of the biasing plate spring 6 becomes relatively large as illustrated in FIG. 14, and more specifically, becomes larger than in the first stage.

As illustrated in FIG. 13D, when the biasing plate spring 6 elastically contacts the second corner portion 33 and the third corner portion 34 (two locations), the biasing plate spring 6 can no longer increase the amount of deflection in the first direction any further, and reaches a so-called bottoming out state.

In the present example, the spring constant of the biasing plate spring 6 changes in two stages according to the amount of deflection of the biasing plate spring 6 with respect to the first direction. More specifically, the spring constant of the biasing plate spring 6 increases from a relatively small value (first stage) to a relatively large value (second stage) as the amount of deflection of the biasing plate spring 6 with respect to the first direction increases.

According to the worm reducer 1 of the present example, even in a case in which a large torque is input in reverse to the worm reducer 1 from a portion located on the downstream side of the worm reducer 1 in terms of the direction of power transmission (from a tire in the present example) during operation of a mechanical device (in this example, an automobile) incorporating the worm reducer 1, the occurrence of abnormal noise can be efficiently suppressed due to the presence of the biasing plate spring 6.

More specifically, the spring constant of the biasing plate spring 6 can be set to a relatively large value (second stage) just before the amount of deflection of the biasing plate spring 6 with respect to the first direction increases by reversely applying a large torque (including torque vibration) to the worm reducer 1 to the state illustrated in FIG. 13D. Therefore, the force at which the biasing plate spring 6 collides with the third corner portion 34 can be efficiently suppressed by the large elastic force of the biasing plate spring 6.

Furthermore, the spring constant of the biasing plate spring 6 can be set to a relatively small value (first stage) just before the deflection amount of the biasing plate spring 6 with respect to the first direction decreases by reversing the rotational direction of the worm 4 from the state illustrated in FIG. 13D to the state illustrated in FIG. 13A. Therefore, the force of the collision between the wheel teeth 12 and the worm teeth 13 caused by the reversal of the rotational direction of the worm 4 can be effectively suppressed by reducing the biasing force of the biasing plate spring 6.

In other words, even in a case in which the torque input in reverse to the worm reducer 1 becomes a torque vibration, the repeated occurrence of impact sounds due to the collision between the biasing plate spring 6 and the third corner portion 34 and the teeth rattling noise between the wheel teeth 12 and the worm teeth 13, in other words, the occurrence of a rattling noise, can be efficiently suppressed.

In the present example, during normal operation when no reverse torque input is occurring, the amount of deflection of the biasing plate spring 6 with respect to the first direction is small, and thus the spring constant of the biasing plate spring 6 can be set to a relatively small value (first stage). As a result, during normal operation, regardless of the displacement of the worm 4 due to the occurrence of engaging reaction forces F1 and F2, the friction force acting on the engaging portion between the wheel teeth 12 and the worm teeth 13 can be kept small, and the efficiency of torque transmission from the worm 4 to the worm wheel 3 can be sufficiently ensured.

In short, the worm reducer 1 of the present example makes it easy to achieve, at a high level, both the suppression of abnormal noise when torque is input in reverse and the assurance of torque transmission efficiency during normal operation.

Regarding the biasing force acting on the load point P, which is the force with which the biasing plate spring 6 biases the support bearing 5 toward the worm wheel 3 side, the biasing force in the bottomed-out state as illustrated in FIG. 13D can be set to any number of times larger than the biasing force in the initial state as illustrated in FIG. 13A, but it can be set to preferably three times or more.

In the present example, there are two corner portions, the first corner portion 32 and the second corner portion 33, that serve as the fulcrum S of the biasing plate spring 6; however, in a case of implementing the technique according to the present disclosure, the number of corner portions can be increased more than in the present example, thereby making it possible to change the spring constant of the biasing plate spring 6 in three or more stages.

In a case of implementing the technique according to the present disclosure, the shape of the biasing plate spring may be different from that of the present example.

In the configuration of the present example, the pin 36 is made of an iron alloy; however, the housing 2 including the worm accommodating portion 9 is made of an aluminum alloy. The worm accommodating portion 9 made of an aluminum alloy has good machinability, and a cutting process for forming the holding portion 21 can be easily performed with this configuration. In addition, the pin 36 made of an iron alloy is not only easily available, but also has little effect on the spring characteristics of the biasing plate spring 6 due to dimensional changes. Furthermore, since the biasing spring is a plate spring, in other words, the biasing plate spring 6, it is easy to assemble the biasing spring at the location of use.

By combining these elements, a center distance adjustment mechanism between the worm wheel 3 and the worm 4 can be achieved with high precision, making it easy to ensure that the above-mentioned biasing plate spring 6 functions satisfactorily.

In the present example, the biasing plate spring 6 is arranged so as to extend in the third direction, and is entirely arranged inside the worm accommodating portion 9. Therefore, as illustrated in FIG. 5, the biasing plate spring 6 can be attached with the end portion on the one side in the axial direction of the worm accommodating portion 9 facing forward. Therefore, the assembly work of assembling the biasing plate spring 6 can be easily performed.

Although different from the configuration disclosed herein, it is also possible to adopt a configuration in which the base end portion and the intermediate portion of the biasing plate spring are positioned outside the worm accommodating portion, and only the tip-end portion of the biasing plate spring is inserted inside the worm accommodating portion, so that the tip-end portion presses against the outer circumferential surface of an inner diameter side member such as the support bearing. However, in this case, it is necessary to form a through hole or notch in part of the worm accommodating portion for inserting the tip-end portion of the biasing plate spring, which can result in problems such as increased costs for forming the through hole or notch and the inability to install the worm accommodating portion in a location where airtightness is required due to the through hole or notch.

Furthermore, there is a possibility that a problem will occur in that a portion of the biasing spring that is arranged outside the worm accommodating portion will collide with a surrounding object and be damaged before the device is installed at the location of use.

On the other hand, in the configuration of the present example, the biasing plate spring 6 is entirely arranged inside the worm accommodating portion 9, and thus the above-mentioned problems may be avoided.

The elastic clamping means 7 clamps the support bearing 5, which corresponds to the inner diameter side member, from both sides with respect to a third direction that is perpendicular to both the first direction, which is the biasing direction by the biasing plate spring 6, and the second direction, which is the axial direction of the worm accommodating portion 9.

The elastic clamping means 7 has a pair of clamping plate springs 41 arranged on both sides in the third direction in a portion between the outer circumferential surface of the support bearing 5 and the holding portion 21 provided on the inner circumferential surface of the worm accommodating portion 9 corresponding to the outer diameter side member. Each clamping plate spring 41 of the pair of clamping plate springs 41 exhibits a non-linear spring characteristic in which the spring constant increases as the amount of deflection in the third direction increases.

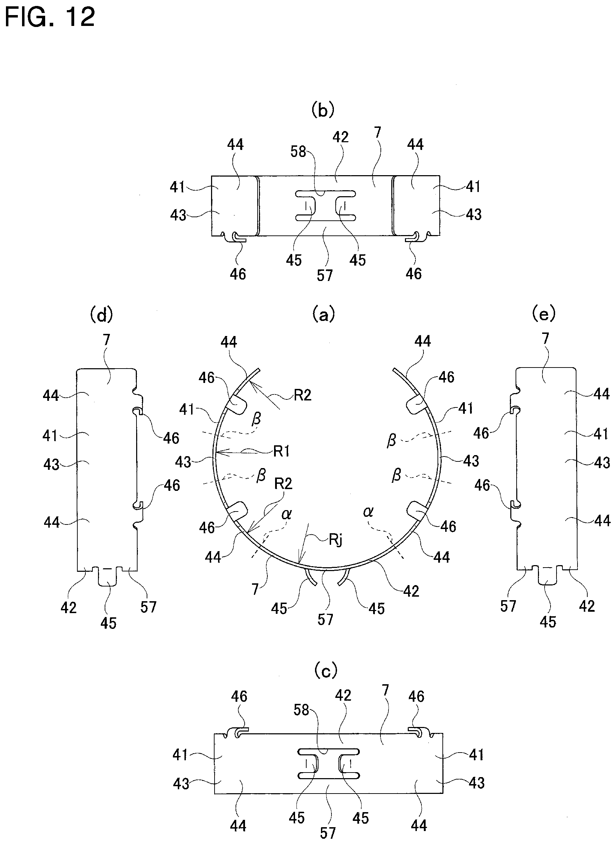

In the present example, the elastic clamping means 7 is configured by a metal plate spring having an overall notched cylindrical shape (C-shape) as illustrated in FIGS. 12A to 12E. The pair of clamping plate springs 41 configure side portions on both sides in the circumferential direction of the elastic clamping means 7. The elastic clamping means 7 has a circumferential connecting portion 42 that circumferentially connects the end portions in the circumferential direction of the pair of clamping plate springs 41 on the side closer to the worm wheel 3 to each other. In FIG. 12A, dashed lines α indicate boundary lines between the pair of clamping plate springs 41 and the circumferential connection portion 42.

In the present example, each of the pair of clamping plate springs 41 has a first portion 43 that constitutes an intermediate portion in the circumferential direction and second portions 44 that constitute side portions on both sides in the circumferential direction. In FIG. 12A, dashed lines β indicate boundary lines between the first portion 43 and the second portions 44.

The first portion 43 has a partially cylindrical shape curved along the outer circumferential surface of the support bearing 5. Each of the second portions 44 has a partially cylindrical shape curved along the outer circumferential surface of the support bearing 5, and is smoothly continuous with the first portion 43. That is, when viewed from the axial direction of the worm 4, the first portion 43 and the second portions 44 are connected so that the end portions in the circumferential direction of their respective inner surfaces in the radial direction have a common tangent, and the end portions in the circumferential direction of their respective outer surfaces in the radial direction are connected so as to have a common tangent.

The radius of curvature R1 of the inner surface in the radial direction of the first portion 43 in a free state is smaller than the radius of curvature Rs (see FIG. 5) of the outer circumferential surface of the support bearing 5 (R1 < Rs). The radius of curvature R2 of the inner surface in the circumferential direction of the second portion 44 in the free state is greater than the radius of curvature R1 of the inner surface in the radial direction of the first portion 43 in the free state (R2 > R1). In the present example, the radius of curvature R2 is set equal to the radius of curvature Rs of the outer circumferential surface of the support bearing 5 (R2 = Rs). However, in a case of implementing the technique according to the present disclosure, the radius of curvature R2 can be slightly larger or smaller than the radius of curvature Rs.

In the present example, in each of the pair of clamping plate springs 41, residual stress is applied to the first portion 43 corresponding to a portion that contacts the holding portion 21 provided on the inner circumferential surface of the worm accommodating portion 9. As a result, it is easier to ensure the durability of the first portion 43, which is more likely to undergo elastic deformation during operation than other portions. In a case of implementing the technique according to the present disclosure, applying the residual stress may be omitted.

The circumferential connecting portion 42 has a partially cylindrical shape curved along the outer circumferential surface of the support bearing 5, and is smoothly continuous with each of the clamping plate springs 41 of the pair of clamping plate springs 41. That is, when viewed from the axial direction of the worm 4, the clamping plate springs 41 and the circumferential connecting portion 42 are connected so that the end portions in the circumferential direction of their respective inner surfaces in the radial direction have a common tangent, and are connected so that the end portions in the circumferential direction of their respective outer surfaces in the radial direction have a common tangent.

In the present example, the radius of curvature Rj of the inner surface in the radial direction of the circumferential connecting portion 42 in the free state is set equal to the radius of curvature R2 of the inner surface in the radial direction of the second portion 44 in the free state (Rj = R2).

In a case of implementing the technique according to the present disclosure, the circumferential connecting portion may be omitted, that is, the pair of clamping plate springs 41 may be separated from each other.

In the present example, the elastic clamping means 7 has circumferential positioning pieces 45 that engage with the worm accommodating portion 9 in the circumferential direction.

In the present example, two circumferential positioning pieces 45 are provided at an intermediate portion in the circumferential direction of the circumferential connecting portion 42 and spaced apart in the circumferential direction. The two circumferential positioning pieces 45 are provided so as to protrude outward in the radial direction from the intermediate portion in the circumferential direction of the circumferential connecting portion 42.

More specifically, the two circumferential positioning pieces 45 are formed by bending a pair of tongue pieces outward in the radial direction, the tongue pieces being provided by forming an H-shaped through hole in the intermediate portion in the circumferential direction of the circumferential connecting portion 42. The circumferential positioning pieces 45 are portions for engaging in the circumferential direction with the locking portion 25 of the holding portion 21 to position the elastic clamping means 7 in the circumferential direction and to stop rotation.

In a case of implementing the technique according to the present disclosure and providing circumferential positioning pieces, the shape, number, circumferential positions, and the like of the circumferential positioning pieces may be different from those in the present example. The circumferential positioning pieces may also be provided so as to engage in the circumferential direction with an inner diameter side member which is a support bearing or an outer fitting member externally fitted onto the support bearing.

In the present example, the circumferential connecting portion 42 has a low-rigidity portion 57 in the intermediate portion in the circumferential direction, specifically, in a portion between the two circumferential positioning pieces 45, which has a lower rigidity than both side portions in the circumferential direction of the circumferential connecting portion 42, which are the remaining portions in the circumferential direction, and the pair of clamping plate springs 41. In this example, in order to reduce the rigidity of the low rigidity portion 57, a rectangular through hole 58 is formed in the portion in the circumferential direction where the low rigidity portion 57 is located, thereby reducing the section modulus of the portion in the circumferential direction. The low rigidity portion 57 is provided to reduce the interaction between the pair of clamping plate springs 41 by lowering the flexural resistance of the low rigidity portion 57.

In a case of implementing the technique according to the present disclosure, when a low-rigidity portion is provided at the circumferential connecting portion, the low-rigidity portion can be provided at a location in the circumferential direction different from that in the present example, the low-rigidity portion can be provided at multiple locations spaced apart in the circumferential direction, or the low-rigidity portion can be provided over the entire circumferential length. In a case of implementing the technique according to the present disclosure, it is also possible to omit providing a low-rigidity portion in the circumferential connecting portion.

In a case of implementing the technique according to the present disclosure, methods for reducing the rigidity of the low rigidity portion may be adopted that are different from the present example, such as reducing the plate thickness of the low rigidity portion.

In the present example, the elastic clamping means 7 has axial positioning pieces 46 that engage with the support bearing 5 in the axial direction.

In the present example, each of the pair of clamping plate springs 41 is provided with two axial positioning pieces 46 spaced apart from each other in the circumferential direction. More specifically, the axial positioning piece 46 is provided so as to bend inward in the radial direction from end portion on the one side in the axial direction of an intermediate portion in the circumferential direction of each of the second portions 44.

In a case of implementing the technique according to the present disclosure and axial positioning pieces are provided, the shape, number, circumferential position, axial position, and the like of the axial positioning pieces may be different from that of the present example. In addition, the axial positioning pieces may be provided so as to engage in the axial direction with an inner diameter side member made of the worm accommodating portion or an inner fitting member fitted into the worm accommodating portion.

As illustrated in FIG. 5, the elastic clamping means 7 is arranged between the outer circumferential surface of the support bearing 5 and the holding portion 21 provided on the inner circumferential surface of the worm accommodating portion 9. More specifically, the elastic clamping means 7 is externally fitted onto the support bearing 5 and is arranged inside the main holding portion 23 of holding portion 21.

In this state, the two circumferential positioning pieces 45 provided on the elastic clamping means 7 are arranged inside the locking portions 25 of the holding portion 21, and thereby engage with the locking portions 25 in the circumferential direction. As a result, the elastic clamping means 7 is positioned in the circumferential direction, and the pair of clamping plate springs 41 of the elastic clamping means 7 are arranged on both sides in the third direction in a portion between the outer circumferential surface of the support bearing 5 and the main holding portion 23.

In the present example, a gap in the first direction and a gap in the third direction are provided between the two circumferential positioning pieces 45 and the locking portion 25. As a result, slight displacement of the two circumferential positioning pieces 45 relative to the locking portion 25 in the first and third directions is allowed, which is necessary during operation.

In the present example, dimensions in the first direction of the two circumferential positioning pieces 45 are set so that the amount of penetration of the two circumferential positioning pieces 45 into the locking portion 25 in the first direction is always sufficiently ensured, regardless of whether the elastic clamping means 7 moves in the first direction together with the tip-end portion of the worm 4 and the support bearing 5 during operation.

Each of the axial positioning pieces 46 provided on the elastic clamping means 7 comes in contact against a side surface on the one side in the axial direction of the outer ring 18 of the support bearing 5, thereby engaging with the outer ring 18 in the axial direction. As a result, the elastic clamping means 7 is positioned in the axial direction relative to the support bearing 5.

Furthermore, each of the clamping plate springs 41 of the pair of clamping plate springs 41 is arranged as will be described below relative to surrounding portions in a state in which the engaging reaction forces F1, F2 are zero.

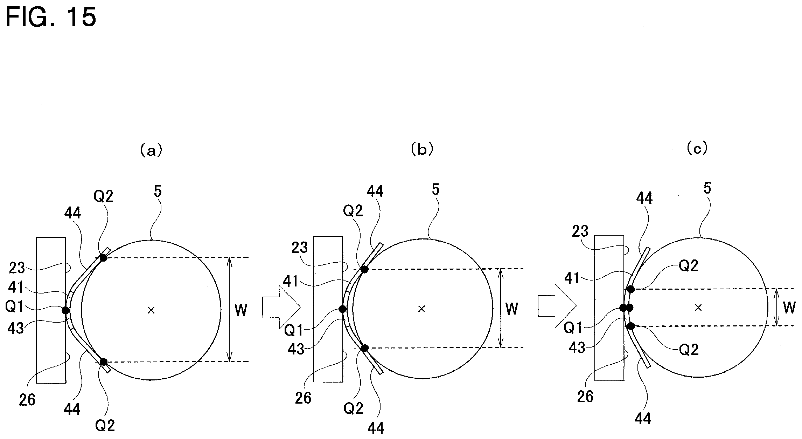

A center portion in the circumferential direction of the outer surface in the radial direction of the first portion 43 comes in contact with the flat surface portion 26 of the main holding portion 23 at a point Q1 illustrated in FIG. 15A. The end portion on the outer side in the circumferential direction of the inner surface in the radial direction of each of the second portions 44, in other words, the end portion of the second portion 44 that is on the far side from the first portion 43 in the circumferential direction comes in contact with the outer circumferential surface of the support bearing 5 at point Q2 illustrated in Figure 15A. The inner surface in the radial direction of the first portion 43 is not in contact with the outer circumferential surface of the support bearing 5, and a gap exists between the inner surface in the radial direction of the first portion 43 and the outer circumferential surface of the support bearing 5.

The outer surface in the radial direction of each of the second portions 44 does not come in contact with the main holding portion 23, and a gap exists between the outer surface in the radial direction of each of the second portions 44 and the main holding portion 23. That is, the clamping plate spring 41 comes in contact with the main holding portion 23 at only one point (point Q1 illustrated in FIG. 15A), and comes in contact the outer circumferential surface of the support bearing 5 at only two points (points Q2 illustrated in FIG. 15A).

In a state in which the engaging reaction forces F1, F2 are zero, an initial deflection in the third direction is generated in each of the pair of clamping plate springs 41. As a result, even in a state in which the engaging reaction forces F1, F2 are zero, the support bearing 5 is prevented from rattling in the third direction inside the main holding portion 23. However, from the aspect of keeping the frictional force of the pair of clamping plate springs 41 against the flat surface portion 26 small in a state in which the engaging reaction forces F1, F2 are zero, it is preferable to set the initial deflection in the third direction as small as possible.

Of the second portions 44 of the clamping plate spring 41 located on the other side (left side in FIG. 5) in the third direction of the pair of clamping plate springs 41, the second portion 44, which is the far side from the worm wheel 3, intersects with a radial line L1 including a vector of the engaging reaction force F1 when viewed from the second direction. Of the second portions 44 of the clamping plate spring 41 located on the one side (the right side in FIG. 5) in the third direction of the pair of clamping plate springs 41, the second portion 44, which is the far side from the worm wheel 3, intersects with a radial line L2 including a vector of the engaging reaction force F2 when viewed from the second direction.

In the above state, the elastic clamping means 7 clamps the support bearing 5 from both sides in the third direction by the pair of clamping plate springs 41. Thus, the momentum of the tip-end portion of the worm 4 when moving in the third direction is suppressed, thereby suppressing the generation of abnormal noise.

In the configuration of the present example, in order to enable the tip-end portion of the worm 4 to move toward and away from the worm wheel 3 in the first direction, the main holding portion 23 arranged around the support bearing 5 is formed to be larger than the outer circumferential surface of the support bearing 5. Therefore, the tip-end portion of the worm 4 can also move in the third direction.

On the other hand, the engaging reaction forces F1, F2 acting on the worm 4 include not only a first directional component force but also a third directional component force. The direction of the third directional component is reversed depending on the rotational direction of the worm 4. Therefore, when the tip-end portion of the worm 4 is allowed to move in the third direction without resistance, the third directional component of the engaging reaction forces F1, F2 acting on the worm 4 will cause the outer circumferential surface of the support bearing 5 to collide with the main holding portion 23 with force in the third direction, making it likely to generate abnormal noises such as harsh hitting sounds or rattling.

In the configuration of the present example, in order to suppress the generation of such abnormal noise, the support bearing 5 is clamped from both sides in the third direction by the pair of clamping plate springs 41 of the elastic clamping means 7. Thus, the momentum of the tip-end portion of the worm 4 when moving in the third direction is suppressed, thereby suppressing the generation of abnormal noise.

In the present example, when the engaging reaction force F1 or F2 applied to the tip-end portion of the worm 4 increases, the pressing force in the third direction acting on the clamping plate spring 41 located on the one side (left side in FIG. 5) or the other side (right side in FIG. 5) in the third direction from the support bearing 5 increases. As a result, the amount of deflection of the clamping plate spring 41 in the third direction increases. FIGS. 15A to 15C are diagrams that schematically illustrate the increase in the amount of deflection.

In the present example, as the amount of deflection of the clamping plate spring 41 in the third direction increases, the distance W in the first direction between the contact portions (points Q2) of the inner surfaces in the radial direction of the two second portions 44 with the outer circumferential surface of the support bearing 5 continuously decreases in order as illustrated in FIGS. 15A to 15C. Note that, as illustrated in FIG. 15C, when the first portion 43 of the clamping plate spring 41 becomes clamped between the flat surface portion 26 of the main holding portion 23 and the outer circumferential surface of the support bearing 5, the clamping plate spring 41 can no longer increase the amount of deflection in the third direction any further, and reaches a so-called bottoming out state.

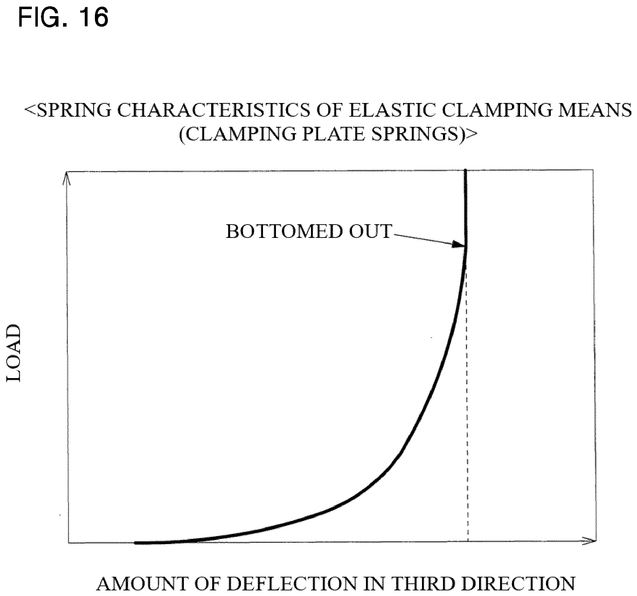

In the present example, up until the bottoming out state is reached, the distance W continuously decreases as the amount of deflection of the clamping plate spring 41 in the third direction increases, whereby the spring constant of the clamping plate spring 41 continuously increases as illustrated in FIG. 16 (conceptual diagram).

Therefore, the biasing action of the biasing plate spring 6 on the tip-end portion of the worm 4 and the support bearing 5 can be made smooth, and it becomes easier to suppress the force of collision between components in the third direction around the tip-end portion of the worm 4.

In other words, the spring constant of the clamping plate spring 41 becomes small at the stage where the amount of deflection in the third direction is small (low load region), and therefore, at this stage, the frictional force acting between the clamping plate spring 41 and the flat surface portion 26 of the main holding portion 23, and the frictional force acting between the clamping plate spring 41 and the outer circumferential surface of the support bearing 5 become small. This allows the tip-end portion of the worm 4 and the support bearing 5 to move smoothly in the first direction. Therefore, the biasing operation of the biasing plate spring 6 on the tip-end portion of the worm 4 and the support bearing 5 can be made smoother accordingly.

On the other hand, the spring constant of the clamping plate spring 41 becomes large at the stage where the amount of deflection in the third direction becomes large (high load region), and thus the momentum of the movement of the support bearing 5 in the third direction just before reaching the bottomed-out state illustrated in FIG. 15C can be efficiently suppressed by the large elasticity of the clamping plate spring 41. As a result, the occurrence of impact noise when bottoming out can be effectively reduced.

Furthermore, the spring constant of the clamping plate spring 41 can be reduced just before the amount of deflection of the clamping plate spring 41 in the third direction decreases by reversing the rotational direction of the worm 4 from the state illustrated in FIG. 15C to the state illustrated in FIG. 15A. Therefore, the force of the collision between the wheel teeth 12 and the worm teeth 13 due to the reversal of the rotational direction of the worm 4 can be effectively suppressed by reducing the biasing force of the clamping plate spring 41. This makes it possible to effectively suppress the generation of teeth rattling noise between the wheel teeth 12 and the worm teeth 13.

In the present example, the radius of curvature of the inner surface in the radial direction of the second portions 44 that constitute portions on both sides in the circumferential direction of the clamping plate spring 41 is constant; however, in a case of implementing the technique according to the present disclosure, the radius of curvature of the inner surface in the radial direction of the second portions may also be changed stepwise or continuously in the circumferential direction.

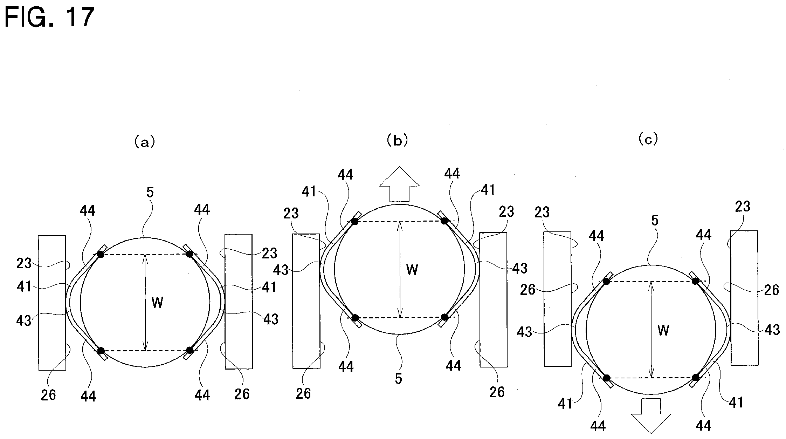

In the present example, the portions of the main holding portion 23 with which the pair of clamping plate springs 41 make elastic contact are formed of flat surface portions 26 extending in the first direction. Thus, as illustrated in FIGS. 17A to 17C, even when the elastic clamping means 7 moves in the first direction, the amount of deflection in the third direction of the pair of clamping plate springs 41, in other words, the distance W, does not change, and the spring constant of each of the clamping plate springs 41 of the pair of clamping plate springs 41 can be kept constant. Therefore, stable spring characteristics can be ensured for the biasing plate spring 6 and the elastic clamping means 7.

In a case of implementing the technique according to the present disclosure, the length of the pair of flat surface portions 26 in the first direction can be made smaller than a stroke amount by which the elastic clamping means 7 can move in the first direction together with the tip-end portion of the worm 4 and the support bearing 5 during operation. In other words, when a large engaging reaction force is applied to the worm 4, the elastic contact portion of the clamping plate spring 41 with the main holding portion 23 can ride up from the flat surface portions 26 onto the cylindrical surface portion 27. Even in this case, the spring constant of the clamping plate spring 41 can be kept constant while the contact portion is present on the flat surface portions 26.

In the present example, when viewed from the second direction, radial lines L1, L2 including the vectors of the engaging reaction forces F1, F2 intersect with a portion in the circumferential direction of the cylindrical surface portion 27 of the main holding portion 23. In addition, of the second portions 44 of the clamping plate spring 41 located on the other side (left side in FIG. 5) in the third direction of the pair of clamping leaf springs 41, the second portion 44, which is the far side from the worm wheel 3, intersects with the radial line L1 including the vector of the engaging reaction force F1 when viewed from the second direction.

Of the second portions 44 of the clamping plate spring 41 located on the one side (the right side in FIG. 5) in the third direction of the pair of clamping plate springs 41, the second portion 44, which is the far side from the worm wheel 3, intersects with the radial line L2 including the vector of the engaging reaction force F2 when viewed from the second direction.

Therefore, even in a case in which the support bearing 5 tends to move in the direction of the engaging reaction force F1 during operation, the momentum of the movement can be suppressed by the elastic force of the second portion 44 on the side far from the worm wheel 3 of the second portions 44 of the clamping plate spring 41 located on the one side in the third direction. Furthermore, the engaging reaction force F1 can be supported by the cylindrical surface portion 27 of the main holding portion 23.

Even in a case in which the support bearing 5 tends to move in the direction of the engaging reaction force F2 during operation, the momentum of the movement can be suppressed by the elastic force of the second portion 44 on the side far from the worm wheel 3 of the second portions 44 of the clamping plate spring 41 located on the other side in the third direction. Furthermore, the engaging reaction force F2 can be supported by the cylindrical surface portion 27 of the main holding portion 23.

In the present example, as illustrated in FIG. 5, the cylindrical surface portion 27 of the main holding portion 23 is present in a circumferential range where the cylindrical surface portion 27 can intersect with radial lines L1, L2 including the vectors of the engaging reaction forces F1, F2 when viewed from the second direction; however, the inclination angle of the radial line L2 with respect to the third direction is smaller than the inclination angle of the radial line L1 with respect to the third direction. Therefore, a circumferential edge portion E2 of the cylindrical surface portion 27 on the radial line L2 side (right side in FIG. 5) in the third direction can be arranged on the side closer to the worm wheel 3 in the first direction (lower side in FIG. 5) than a circumferential edge portion E1 on the radial line L1 side (left side in FIG. 5).

Thus, of the sub-holding portion 24 protrudes outward in the radial direction from the end portion of the main holding portion 23 that is on the far side from the worm wheel 3 in the first direction (upper side in FIGS. 5 and 8), the large recessed portion 28 in which one end portion of the biasing plate spring 6 and the pin 36 are arranged is arranged farther on the same side as the radial line L2 than the central axis of the worm 4 in the third direction (right side in FIG. 5).

This enables the large recessed portion 28 to be arranged closer to the worm wheel 3 in the first direction than when the large recessed portion 28 is arranged on the same side as the radial line L1 with respect to the third direction (left side in FIG. 5). That is, by adopting such an arrangement, the width dimension in the first direction of the entire holding portion 21 including the main holding portion 23 and the sub-holding portion 24 can be minimized.

In a case of implementing the technique according to the present disclosure, the spring characteristics of each of the clamping plate springs of the pair of clamping plate springs may be linear.

In the configuration of the present example, the biasing plate spring 6 that biases the support bearing 5 toward the worm wheel 3 side with respect to the first direction and the elastic clamping means 7 that clamps the support bearing 5 from both sides in the third direction are made as separate parts. Therefore, unlike a case in which the biasing plate spring and the elastic clamping means are made as one integral part, it is possible to set the respective spring characteristics of the biasing plate spring 6 and the elastic clamping means 7 without them interfering with each other. Therefore, the degree of freedom in designing the biasing plate spring 6 and the elastic clamping means 7 can be increased.

### (2) Electric Power Steering Apparatus

As illustrated in FIG. 1, the electric power steering apparatus 48 of the present example includes a steering wheel 49, a steering shaft 50, a steering column 51, a pair of universal joints 52a, 52b, an intermediate shaft 53, a steering gear unit 54, and the worm reducer 1 and the electric motor 11 of the present example.

The steering wheel 49 is supported and fixed to a rear end portion of the steering shaft 50. The steering shaft 50 is rotatably supported on an inside of the steering column 51 that is supported by the vehicle body. A front end portion of the steering shaft 50 is connected to a pinion shaft 55 of the steering gear unit 54 through the universal joint 52a on the rear side, the intermediate shaft 53, and the universal joint 52b on the front side.

Therefore, when a driver turns the steering wheel 49, the rotation of the steering wheel 49 is transmitted to the pinion shaft 55 through the steering shaft 50, the pair of universal joints 52 a, 52b, and the intermediate shaft 53. The rotation of the pinion shaft 55 is converted into linear motion of a rack shaft (not illustrated) of the steering gear unit 54 that engages with the pinion shaft 55. As a result, a pair of tie rods 56 are pushed and pulled, and a steering angle corresponding to the amount of rotation of the steering wheel 49 is applied to left and right steered wheels.

The electric power steering apparatus 48 of the present example is configured to reduce the force required by the driver to operate the steering wheel 49 by increasing the auxiliary power of the electric motor 11 by the worm reducer 1 and then applying the force to the front end portion of the steering shaft 50.

In a case of implementing the technique according to present disclosure, the worm reducer 1 and the electric motor 11 can also be arranged at a position where auxiliary power is applied to the pinion shaft or rack shaft of the steering gear unit.

### [Second Example]

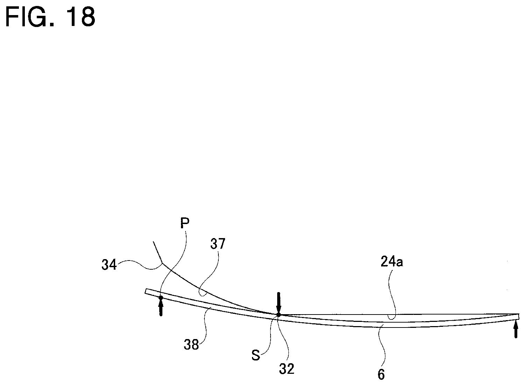

A second example of an embodiment according to the present disclosure will be described with reference to FIG. 18.

In the present example, a portion of the sub-holding portion 24a with which the biasing plate spring 6 elastically contacts is configured by a convex curved surface portion 37. In the construction of the present example employing such a configuration, as the amount of deflection of the biasing plate spring 6 with respect to the first direction increases, the biasing plate spring 6 curves along the convex curved surface portion 37. Therefore, the position of the fulcrum S of the biasing plate spring 6 can be continuously changed in a direction approaching the load point P, and the spring constant of the biasing plate spring 6 can be continuously increased, specifically, quadratically.

The other configurations and effects of the second example are similar to those of the first example.

The technique according to the present disclosure can be implemented by appropriately combining the structures of the above-described examples of the technique according to the present disclosure to the extent that no contradiction occurs.

### REFERENCE SIGNS LIST

1 Worm reducer
2 Housing
3 Worm wheel
4 Worm
5 Support bearing
6 Biasing plate spring
7 Elastic clamping means
8 Wheel accommodating portion
9 Worm accommodating portion
10 Cover body
11 Electric motor
12 Wheel teeth
13 Worm teeth
14 Ball bearing
15 Output shaft
16 Coupling
17 Inner ring
18 Outer ring
19 Ball
20 Small-diameter cylindrical surface portion
21 Holding portion
22 Stepped surface
23 Main holding portion
24, 24a Sub-holding portion
25 Locking portion
26 Flat surface portion
27 Cylindrical surface portion
28 Large recessed portion
29 Small recessed portion
30 First inclined surface portion
31 Second inclined surface portion
32 First corner portion
33 Second corner portion
34 Third corner portion
35 Recessed portion
36 Pin
37 Convex curved surface portion
38 Band plate portion
39 Base plate portion
40 Folded plate portion
41 Clamping plate spring
42 Circumferential connecting portion
43 First portion
44 Second portion
45 Circumferential positioning piece
46 Axial positioning piece
47 Retaining ring
48 Electric power steering apparatus
49 Steering wheel
50 Steering shaft
51 Steering column
52a, 52b Universal joint
53 Intermediate shaft
54 Steering gear unit
55 Pinion shaft
56 Tie rod
57 Low-rigidity portion
58 Through hole

## Claims

1. A worm reducer, comprising:
a housing having a wheel accommodating portion and a worm accommodating portion having a central axis that is at a skewed position relative to a central axis of the wheel accommodating portion and an intermediate portion in an axial direction that opens into the wheel accommodating portion;
a worm wheel having wheel teeth on an outer circumferential surface thereof and rotatably supported inside the wheel accommodating portion;
a worm having worm teeth on an outer circumferential surface thereof that engage with the wheel teeth and is rotatably supported inside the worm accommodating portion;
a support bearing externally fitted onto a tip-end portion of the worm; and
a biasing plate spring configured to bias an inner diameter side member, that is the support bearing or an outer fitting member externally fitted onto the support bearing, toward the worm wheel;
the biasing plate spring arranged on a far side from the worm wheel in a first direction, that is a biasing direction of the biasing plate spring, in a portion between an outer circumferential surface of the inner diameter side member and an inner circumferential surface of an outer diameter side member that is the worm accommodating portion or an inner fitting member internally fitted into the worm accommodating portion;
having a load point that is a contact portion with the outer circumferential surface of the inner diameter side member, and a fulcrum that is a portion of contact portions in contact with the inner circumferential surface of the outer diameter side member that is located at a position closest to the load point; and
exhibiting a non-linear spring characteristic in which a spring constant increases as a position of the fulcrum changes to approach the load point as an amount of deflection in the first direction increases.

2. The worm reducer according to claim 1, wherein the biasing plate spring, in a state of being arranged to extend in a third direction perpendicular to both the first direction and a second direction that is the axial direction of the worm accommodating portion, has one end portion in the third direction supported in a cantilever manner by the outer diameter side member, and has the load point at an other end portion in the third direction.

3. The worm reducer according to claim 2, wherein the one end portion of the biasing plate spring is supported in a cantilever manner relative to the outer diameter side member using a pin arranged to extend in the second direction.

4. The worm reducer according to claim 3, wherein the outer diameter side member is made of an aluminum alloy, and the pin is made of an iron alloy.

5. The worm reducer according to claim 2, wherein
an inner circumferential surface of the outer diameter side member has a main holding portion and a sub-holding portion;
the main holding portion is larger than the outer circumferential surface of the inner diameter side member, and the inner diameter side member is arranged inside the main holding portion;
the sub-holding portion protrudes outward in a radial direction from an end portion of the main holding portion that is on a far side from the worm wheel in the first direction, and the biasing plate spring is arranged inside the sub-holding portion;
the main holding portion, as viewed from the second direction, exists in a circumferential range capable of intersecting with a radial line L1 including a vector of an engaging reaction force F1 applied to the worm from an engaging portion between the worm teeth and the wheel teeth when the worm rotates in a predetermined direction, and capable of intersecting with a radial line L2 including a vector of an engaging reaction force F2 applied to the worm from the engaging portion when the worm rotates in a direction opposite to the predetermined direction;
an inclination angle of the radial line L2 with respect to the third direction is smaller than an inclination angle of the radial line L1 with respect to the third direction; and
a portion of the sub-holding portion, at which the one end portion of the biasing plate spring is arranged, is arranged more on the same side as the radial line L2 than a central axis of the worm in the third direction.

6. The worm reducer according to claim 2, wherein the outer diameter side member has a plurality of corner portions spaced apart from each other in the third direction as portions that come into contact with the biasing plate spring during operation.

7. The worm reducer according to claim 6, wherein the biasing plate spring is configured to be capable of simultaneously coming in contact with two or more of the plurality of corner portions during operation.

8. The worm reducer according to claim 2, wherein the outer diameter side member has a convex curved surface portion that comes into contact with the biasing plate spring during operation.

9. The worm reducer according to any one of claims 1 to 8, comprising
an elastic clamping means for clamping the inner diameter side member from both sides in a third direction perpendicular to both the first direction and a second direction that is the axial direction of the worm accommodating portion; wherein
the elastic clamping means has a pair of clamping plate springs arranged on both sides in the third direction in a portion between the outer circumferential surface of the inner diameter side member and the inner circumferential surface of the outer diameter side member; and
each clamping plate spring of the pair of clamping plate springs exhibits a non-linear spring characteristic in which a spring constant increases as an amount of deflection in the third direction increases.
